# EUROPÄISCHE PATENTSCHRIFT

(11) **EP 1 379 744 B1**
(45) Veröffentlichungstag und Bekanntmachung des Hinweises auf die Patenterteilung: **18.05.2005**
(21) Anmeldenummer: 02722230.6
(22) Anmeldetag: 16.03.2002
(51) Int. Cl.: E04H 12/08

(54) **VERBINDUNGSFLANSCH FÜR ROHRFÖRMIGE BAUTEILE**
CONNECTING FLANGE FOR TUBULAR COMPONENTS
BRIDE DE RACCORDEMENT POUR ELEMENTS TUBULAIRES

(30) Priorität: 23.03.2001 DE 10114431; 29.05.2001 DE 10126049
(43) Veröffentlichungstag der Anmeldung: 14.01.2004
(73) Patentinhaber: Wobben, Aloys, 26607 Aurich (DE)
(72) Erfinder: Wobben, Aloys, 26607 Aurich (DE)
(74) Vertreter: Göken, Klaus G.
(86) Internationale Anmeldenummer: PCT/EP2002/002931
(87) Internationale Veröffentlichungsnummer: WO 2002/077397

(56) Entgegenhaltungen:
- WO-A-02/38890
- WO-A-02/38891
- FR-A- 2 749 342
- US-A- 4 272 929
- US-A- 5 333 436

## Beschreibung

Die vorliegende Erfindung betrifft einen ringförmigen Verbindungsflansch zum Anbringen an einem Ende eines rohrförmigen Bauteils nach dem Oberbegriff von Anspruch 1.

Zur Verbindung von rohrförmigen Bauteilen sind Ringflanschverbindungen z. B. aus Dieter Lehmann, "Berechnung von L-Flanschen mit unterschiedlichen Kontaktflächen/Ringflanschformen nach DIN 4133", Ernst & Sohn, Stahlbau 69 (2000) Heft 9, Seiten 682 - 687, bekannt und diese sind auch weit verbreitet. Zum Beispiel im Rohrleitungsbau sind radial an das rohrförmige Bauteil anschließende Flanschkrägen bekannt, die an den Enden des Rohres üblicherweise radial nach außen orientiert sind. Die Flanschkrägen haben üblicherweise eine ebene, axial von dem eigentlichen Rohrkörper weg orientierte Flanschfläche und weisen auf ihrem Umfang verteilte Durchbohrungen auf. So lassen sich die rohrförmigen Bauteile z.B. als Segmente einer Rohrleitung aneinander setzen und mit Hilfe geeigneter Dichtungen zu einer Rohrleitung miteinander verschrauben.

Weil diese Ringflanschkrägen aus dem Volumen des eigentlichen rohrförmigen Bauteils seitlich auskragen, ist es in aller Regel fertigungstechnisch nachteilig, die Flanschkrägen einstückig mit den rohrförmigen Bauteilen herzustellen (mindestens dann, wenn die Bauteile sich nicht gusstechnisch herstellen lassen): z.B. ein rohrförmiges Bauteil, das aus Metallplatten oder -blech schweißtechnisch hergestellt' wird, lässt sich als Halbzeug in aller Regel kaum so vorformen, dass etwa durch geeignetes Biegen sich ein Flanschkragen ausbilden kann. Auch demzufolge ist es üblich geworden, rohrförmige Bauteile zunächst ohne Flanschkragen herzustellen und einen Flanschkragen dann durch geeignete Fügetechnik - bei Metallrohren z.B. durch Schweißen, bei Kunststoffrohren z.B. durch Kleben oder Laminieren - an das eigentliche Bauteil anzusetzen.

Zur Verbesserung der Krafteinleitung in den möglicherweise hoch beanspruchten Bereich des Ringflansches hat es sich bekannterweise konstruktiv als günstig erwiesen, ein ringförmiges Flanschelement dergestalt vorzuformen, dass es zum Anbringen an ein Ende eines zylinderrohrförmigen Bauteils einen kurzen zylinderrohrförmigen Abschnitt aufweist, dessen eines Ende an das zylinderrohrförmige Bauteil z.B. angeschweißt wird und dessen anderes Ende sich in einem radial anschließenden Flanschkragen fortsetzt mit einer axial von dem Abschnitt wegorientierten Flanschfläche.

Zum Beispiel beim Bau von Türmen für Windenergieanlagen werden zum Erreichen großer Höhen rohrförmige Turmsegmente am Errichtungsort aufeinandergestapelt. Aus Gründen der Statik hat es sich auch in diesem Technikbereich bewährt, den Turm vom bodennahen Bereich nach oben zur Gondel sich konisch verjüngen zu lassen. Bisher hat es bei Flanschverbindungen zur Verbindung der Turmsegmente Risse und andere Ermüdungserscheinungen gegeben.

Demgegenüber liegt der Erfindung die Aufgabe zugrunde, einen ringförmigen Flansch zu liefern, der weniger anfällig ist für Schäden aufgrund der bestimmungsgemäßen Beanspruchung.

Diese Aufgabe wird erfindungsgemäß durch einen Verbindungsflansch mit den Merkmalen des Anspruchs 1 gelöst. Bevorzugte Ausgestaltungen sind in den Unteransprüchen angegeben.

Gerade in dem Anwendungsbereich von Türmen für Windenergieanlagen ist es konstruktiv sinnvoll, jede Möglichkeit der Optimierung des Kraftflusses auszunutzen, der durch Flanschverbindungen zwischen Segmenten des Turms verläuft. Die bekannten Ringflanschelemente mit in Zylinderachsrichtung gerade orientierten, zylinderrohrförmigen Befestigungsabschnitten anzusetzen an konisch rohrförmige Turmbauteile, wie es der Stand der Technik vorsieht, ergibt einen Kraftfluss in der Flanschverbindung mit möglicherweise sogar mehrfachen Richtungsäderungen und ist außerdem auch ästhetisch nachteilig.

Erfindungsgemäß weist ein demgegenüber ringförmiger Flansch einen rohrförmigen Abschnitt zum Anbringen des Flansches an einem Ende eines rohrförmigen Bauteils auf. An ein Ende dieses Abschnittes schließt sich radial, vorzugsweise nach innen, ein Flanschkragen an und hat eine axial von dem Abschnitt weg orientierte, vorzugsweise ebene Flanschfläche. Die Außenwand des rohrförmigen Abschnitts ist konisch und kann so an einem konisch rohrförmigen Bauteil zum Erzeugen einer stetigen gemeinsamen Außenkontur angebracht werden. Dies verbessert den Kraftfluss aus dem konisch rohrförmigen Bauteil in den Flanschkragen wesentlich deshalb, weil eine Umlenkung des Kraftflusses - die in aller Regel für Spannungskonzentration und möglicherweise Bauteilüberlastung sorgt - vermieden wird.

Der Flanschkragen schließt sich vorzugsweise radial nach innen an den rohrförmigen Abschnitt an, um z.B. beim Einsetzen des erfindungsgemäßen Flansches zur Verbindung von Turmsegmenten einer Windenergieanlage den Flanschkragen und auch weitere Verbindungselemente wie z.B. Flanschverbindungsschrauben, die durch vorzugsweise in dem Flanschkragen auf dem Umfang axial angeordnete Bohrungen Verbindungskraft und Formschluss erzeugen, im Innenraum des Turmes anzuordnen und so vor Witterungseinflüssen zu schützen.

Der rohrförmige Abschnitt und der radiale Flanschkragen des erfindungsgemäßen Verbindungsflansches sind vorzugsweise einstückig hergestellt. Der erfindungsgemäße Verbindungsflansch wird also vorzugsweise aus einem metallenen Halbzeug einstückig gedreht oder für die Herstellung aus Faserverbundwerkstoff als ein Bauteil z. B. als Prepreg gewickelt. Aber auch Guss zu einem einstückigen Bauteil ist erfindungsgemäß.

Um mit dem erfindungsgemäßen Flansch eine Verbindung zwischen zwei rohrförmigen Bauteilen mit erfindungsgemäß vorteilhafter kontinuierlicher Außenkontur herstellen zu können, sind zwei erfindungsgemäße Flansche zum Herstellen einer solchen Verbindung vorzugsweise so aufeinander abgestimmt, dass die (konischen) Außenwände der rohrförmigen Abschnitte der beiden Flansche stetig ineinander übergehen, wenn die beiden Flansche mit aufeinanderliegenden Flanschflächen miteinander verbunden sind - also z.B. über die axialen Durchbohrungen in ihren Flanschkrägen, die dann bevorzugt paarweise zueinander fluchten, miteinander verschraubt sind.

Um den Kraftfluss durch die vorzugsweise ebene Flanschfläche und durch eine Verbindungsschraube in der bevorzugten Durchbohrung weiter zu optimieren, ist die Durchbohrung vorzugsweise von einer Ausnehmung in der Flanschfläche umgeben. Dies wirkt sich wegen größerer Dehnlänge günstig auf die Belastung der Verbindungsschraube in der Durchbohrung aus und verlegt die Kontaktzone der Flanschfläche zu einer komplementären Flanschfläche in der Umgebung der Durchbohrung günstig in den radialen Außen- und Innenrandbereich der Flanschfläche.

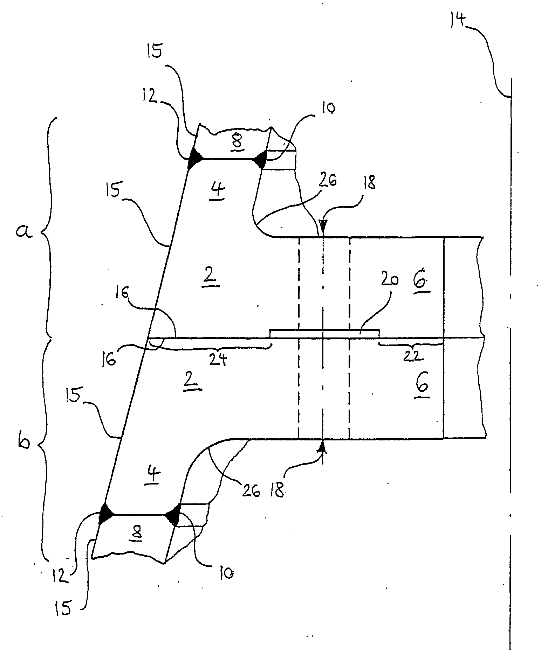

Die Erfindung wird im folgenden mit Bezug auf die beigefügte Zeichnung beschrieben.
- In der Figur: ist ein Querschnitt durch eine erfindungsgemäße Flanschverbindung mit zwei Flanschen dargestellt, die jeweils an ein konisch rohrförmiges Bauteil angebracht sind.

Die in der Figur dargestellte Flanschverbindung bildet sich aus zwei Flanschen 2 (wobei obere Bauteile und Elemente, die also mit dem oberen der beiden dargestellten Flansche 2 in Zusammenhang stehen, bei nötiger Differenzierung mit a und untere mit b bezeichnet sind). Beide Flansche 2 haben einen rohrförmigen Abschnitt 4 und einen radial nach innen an ein Ende des rohrförmigen Abschnitts 4 anschließenden Flanschkragen 6. An das andere Ende des rohrförmigen Abschnitts 4 schließt jeweils ein rohrförmiges Bauteil 8 an und ist dort durch jeweils eine radial innen und eine radial außen liegende Schweißnaht 10, 12 an dem ringförmigen Verbindungsflansch 2 angebracht. Die Flansche 2 sind aus schweißbarem Stahl.

Die so beschriebene Anordnung in der Figur ist insgesamt ring- oder rohrförmig um eine Rotationsachse 14, wobei deren Abstand - also der Durchmesser der gesamten Anordnung - nicht maßstäblich dargestellt ist.

Die Außenwand (15) der rohrförmigen Abschnitte 2 der Flansche 2 ebenso wie die rohrförmigen Bauteile 8 insgesamt sind konisch, und ihre Außenwände (15) gehen stetig - im dargestellten Beispiel geradlinig - ineinander über.

Die beiden Flansche 2 haben jeweils eine axial von dem eigenen rohrförmigen Abschnitt 4 weg orientierte, ebene Flanschfläche 16, die gleich groß sind - also einen gleichen Innen- und Außendurchmesser haben - und die deckungsgleich aufeinander liegen. So zueinander orientiert, weisen die Flansche 2 gleichmäßig auf ihrem Umfang verteilt Durchbohrungen 18 auf, die sich axial durch den jeweiligen Flanschkragen 6 hindurch erstrecken und zueinander fluchtend ausgerichtet sind. Zum Erzeugen von Verbindungskraft und -formschluß für die Flanschverbindung der Flansche 2 können bekannte Schraubverbindungen in den Durchbohrungen 18 angebracht werden. Zur Optimierung des Kraftflusses durch die Flanschverbindung 2 sind die Durchbohrungen 18 radial möglichst nahe an dem rohrförmigen Abschnitt 4 angeordnet, was konstruktiv allerdings insbesondere durch die Zugänglichkeit der Durchbohrungen 18 für Werkzeuge zum Befestigen z.B. von Verbindungsschrauben begrenzt ist.

Der Flanschkragen 6a nur eines (hier des oberen) Flansches 2a der Flanschverbindung weist in seiner Flanschfläche 16a eine Ausnehmung 20 auf, die dort die Durchbohrung 18a umgibt. Wenn nun die beiden Flansche 2 durch eine Flanschverbindungsschraube (nicht dargestellt), die durch die Durchbohrungen 18 hindurchgeführt ist, gegeneinander verspannt werden, wird der Bereich der Kraftübertragung oder des Kraftflusses durch die Flanschflächen 16 radial von den Durchbohrungen 18 nach außen weg in einen radialen Innenrandbereich 22 und einen radialen Außenrandbereich 24 der Flanschflächen 16 verlegt. Insbesondere die Kraftübertragung in dem radialen Außenrandbereich 24 ist strukturmechanisch günstig, weil diese einen geradlinigen, umlenkungsfreien Kraftfluss aus dem oberen konisch rohrförmigen Bauteil 8a durch den konisch rohrförmigen Abschnitt des oberen Flansches 2a in den konisch rohrförmigen Abschnitt 4b des unteren Flansches 2b und schließlich in das untere konisch rohrförmige Bauteil 8b bewirkt - also nochmals: einen Kraftfluss ohne strukturmechanisch ungünstige Umlenkungen. Vorzugsweise ist der Außenrandbereich 24 der Flanschfläche 16 zur weiteren Begünstigung des Kraftflusses breiter als die Stärke der Wandung der rohrförmigen Abschnitte 4 und/oder der Bauteile 8, um nämlich in diesem Bereich auch keine Verengung des Kraftflusses zu bewirken.

Zur weiteren Begünstigung des Kraftflusses durch die Flansche 2 ist der Übergang von der im wesentlichen axialen Erstreckung der rohrförmigen Abschnitte 4 in die radiale Erstreckung der Flanschkrägen 6 nicht scharfkantig, sondern als Radius 26 ausgestaltet. Dies vermeidet strukturmechanisch nachteilige Spannungsspitzen und Kerbwirkung.

## Patentansprüche

1. Ringförmiger Verbindungsflansch mit einem rohrförmigen Abschnitt zum Anbringen an einem stirnseitigen Ende eines rohrförmigen Bauteiles, insbesondere für ein Turmsegment zum Aufbau eines Turmes einer Windenergieanlage, und mit einem an ein Ende des Abschnitts radial anschließenden Flanschkragen mit einer axial von dem rohrförmigen Abschnitt weg orientierten Flanschfläche,
**dadurch gekennzeichnet, dass** die Außenwand (15) des rohrförmigen Abschnitts (4) konisch ist, insbesondere zum Anbringen an einem ebenso konischen Bauteil (8).

2. Flansch nach Anspruch 1,
**dadurch gekennzeichnet, dass** der Flanschkragen (6) radial nach innen an den rohrförmigen Abschnitt (4) anschließt.

3. Flansch nach einem der vorhergehenden Ansprüche,
**dadurch gekennzeichnet, dass** die Flanschfläche (16) eben ist.

4. Flansch nach einem der vorhergehenden Ansprüche,
**dadurch gekennzeichnet, dass** der Flanschkragen (6) mindestens eine axiale Durchbohrung (18) für eine Flanschverbindungsschraube aufweist.

5. Flansch nach Anspruch 4,
**dadurch gekennzeichnet, dass** der Flanschkragen (6) in der Flanschfläche (16) eine Ausnehmung (20) aufweist, die die Durchbohrung (18) umgibt.

6. Flansch nach Anspruch 5,
**dadurch gekennzeichnet, dass** der kürzeste Abstand (24) zwischen der Ausnehmung (20) und einem Rand der Flanschfläche, an den eine Wand (15) des rohrförmigen Abschnitts (4) anschließt, größer ist als die Wandstärke des rohrförmigen Abschnitts (4).

7. Flansch nach einem der vorhergehenden Ansprüche,
**dadurch gekennzeichnet, dass** der rohrförmige Abschnitt (4) und der radiale Flanschkragen (6) einstückig hergestellt, insbesondere aus einem Stück gedreht, sind.

8. Flansch nach einem der vorhergehenden Ansprüche,
**dadurch gekennzeichnet, dass** der Flansch (2) zum Anbringen an dem Ende des rohrförmigen Bauteiles (8) schweißbar ist.

9. Turmsegment (8) zum Aufbau eines Turmes einer Windenergieanlage mit einem Flansch (2) nach einem der vorhergehenden Ansprüche.

10. Flanschverbindung mit zwei Flanschen (2a, 2b) nach einem der vorhergehenden Ansprüche,
**dadurch gekennzeichnet, dass** die Außenwände (15) der rohrförmigen Abschnitte (4) der mit aufeinanderliegenden Flanschflächen (16) miteinander verbundenen Flansche (2) konisch stetig ineinander übergehen.

11. Turm einer Windenergieanlage mit mindestens zwei Turmsegmenten mit einer Flanschverbindung nach Anspruch 10.

## Claims

1. An annular connecting flange comprising a tubular portion for fitting on a front end of a tubular component, particularly for a tower segment for constructing a tower of a wind energy plant, and comprising a flange collar radially adjoining one end of the portion with a flange surface oriented axially away from the tubular portion,
**characterised in that** the exterior wall (15) of the tubular portion (4) is conical, particularly for fitting on a similarly conical component (8).

2. A flange according to Claim 1,
**characterised in that** the flange collar (6) radially inwardly adjoins the tubular portion (4).

3. A flange according to one of the preceding Claims,
**characterised in that** the flange surface (16) is flat.

4. A flange according to one of the preceding Claims,
**characterised in that** the flange collar (6) has at least one axial through-bore (18) for a flange connection screw.

5. A flange according to Claim 4,
**characterised in that** the flange collar (6) has a recess (20) in the flange surface (16), which surrounds the through-bore (18).

6. A flange according to Claim 5,
**characterised in that** the shortest distance (24) between the recess (20) and an edge of the flange surface which a wall (15) of the tubular portion (4) adjoins is greater than the wall thickness of the tubular portion (4).

7. A flange according to one of the preceding Claims,
**characterised in that** the tubular portion (4) and the radial flange collar (6) are manufactured as one piece, particularly turned from one piece.

8. A flange according to one of the preceding Claims,
**characterised in that** the flange (2) is weldable for fitting on the end of the tubular component (8).

9. A tower segment (8) for constructing a tower of a wind energy plant comprising a flange (2) according to one of the preceding Claims.

10. A flange connection comprising two flanges (2a, 2b) according to one of the preceding Claims,
**characterised in that** the exterior walls (15) of the tubular portions (4) of the flanges (2) joined together with flange surfaces (16) located one above the other extend into one another continuously in a conical shape.

11. A tower of a wind energy plant with at least two tower segments comprising a flange connection according to Claim 10.

## Revendications

1. Bride de raccordement annulaire comportant une section tubulaire en vue de la fixation à une extrémité frontale d'un composant tubulaire, en particulier pour un segment de tour en vue de la construction d'une tour d'une installation d'énergie éolienne, et comportant un col de bride adjacent radialement à une extrémité de la section avec une face de bride orientée axialement directement à partir de la section tubulaire, **caractérisée en ce que** la paroi extérieure (15) de la section tubulaire (4) est conique, en particulier en vue de la fixation à un composant pareillement conique (8).

2. Bride selon la revendication 1, **caractérisée en ce que** le col de bride (6) est contigu radialement vers l'intérieur à la section tubulaire (4).

3. Bride selon l'une quelconque des revendications précédentes, **caractérisée en ce que** la face de bride (16) est plane.

4. Bride selon l'une quelconque des revendications précédentes, **caractérisée en ce que** le col de bride (6) présente au moins une perforation axiale (18) pour une vis de raccordement à brides.

5. Bride selon la revendication 4, **caractérisée en ce que** le col de bride (6) présente un creux (20) dans la face de bride (16), ledit creux entourant la perforation axiale (18).

6. Bride selon la revendication 5, **caractérisée en ce que** la plus courte distance (24) entre le creux (20) et une bordure de la face de bride à laquelle une paroi (15) de la section tubulaire (4) est adjacente est supérieure à l'épaisseur de paroi de la section tubulaire (4).

7. Bride selon l'une quelconque des revendications précédentes, **caractérisée en ce que** la section tubulaire (4) et le col de bride radial (6) sont fabriqués d'une seule pièce, en particulier usinés au tour à partir d'un seul bloc.

8. Bride selon l'une quelconque des revendications précédentes, **caractérisée en ce que** la bride (2) est soudable en vue de la fixation à l'extrémité du composant tubulaire (8).

9. Segment de tour (8) en vue de la construction d'une tour d'une installation d'énergie éolienne avec une bride (2) selon l'une quelconque des revendications précédentes.

10. Raccordement à brides avec deux brides (2a, 2b) selon l'une quelconque des revendications précédentes, **caractérisé en ce que** les parois extérieures (15) des sections tubulaires (4) des brides (2) reliées ensemble avec des faces de bride (16) posées l'une sur l'autre se confondent de manière continue en forme de cône.

11. Tour d'une installation d'énergie éolienne avec au moins deux segments de tour avec un raccordement à brides selon la revendication 10.
